# EUROPEAN PATENT APPLICATION

(11) **EP 4 751 886 A1**
(43) Date of publication of application: **03.06.2026**
(21) Application number: 24857876.7
(22) Date of filing: 25.05.2024
(51) Int. Cl.: B29C 64/255

(54) **FILAMENT SPOOL RACK FOR 3D PRINTER, 3D PRINTER, AND 3D PRINTING SYSTEM**

(30) Priority: 25.08.2023 CN 202322307959 U; 07.12.2023 WO PCT/CN2023/137255; 09.12.2023 WO PCT/CN2023/137710
(71) Applicant: Shenzhen Tuozhu Technology Co., Ltd., Shenzhen, Guangdong 518000 (CN)
(72) Inventor: ZHANG, Zezheng, Shenzhen, Guangdong 518000 (CN); LI, Zewen, Shenzhen, Guangdong 518000 (CN); YUAN, Weijie, Shenzhen, Guangdong 518000 (CN)
(74) Representative: Grünecker Patent- und Rechtsanwälte PartG mbB
(86) International application number: PCT/CN2024/095371
(87) International publication number: WO 2025/044330

(57) **Abstract**

The present application provides a filament spool holder for a 3D printer, a 3D printer, and a 3D printing system. The filament spool holder comprises: a filament spool holder body; at least two cartridge rotating shafts connected to the filament spool holder body, wherein one cartridge rotating shaft is used for placing one 3D printing filament spool; and at least two feeding/returning devices fixed on the filament spool holder body, wherein each feeding/returning device comprises an extrusion mechanism, and is used for conveying a filament in the 3D printing filament spool on the corresponding cartridge rotating shaft to the 3D printer or returning the filament to the 3D printing filament spool on the corresponding cartridge rotating shaft. By implementing the embodiments of the present application, a plurality of 3D printing filament spools can be placed on the filament spool holder at the same time; and the feeding/returning devices are provided, so that acting forces can be supplied to the filament, facilitating feeding and returning of the filament.

## Description

The present application claims priority to Chinese Patent Application No. 202322307959.7, filed with the China National Intellectual Property Administration on August 25, 2023 and entitled "FILAMENT SPOOL HOLDER FOR 3D PRINTER, 3D PRINTER, AND 3D PRINTING SYSTEM", to International Patent Application PCT/CN2023/137255, filed with the China National Intellectual Property Administration on December 7, 2023 and entitled "FILAMENT SPOOL HOLDER FOR 3D PRINTER, 3D PRINTER, AND 3D PRINTING SYSTEM", and to International Patent Application No. PCT/CN2023/137710, filed with the China National Intellectual Property Administration on December 9, 2023 and entitled "FILAMENT SPOOL HOLDER FOR 3D PRINTER, 3D PRINTER, AND 3D PRINTING SYSTEM", the contents of which are incorporated herein by reference in their entirety.

### TECHNICAL FIELD

The present application relates to the technical field of 3D printing, and in particular to a filament spool holder for a 3D printer, a 3D printer, and a 3D printing system.

### BACKGROUND

A 3D printer, also known as a three-dimensional printer or an additive manufacturing device, is a process equipment for rapid prototyping which is typically achieved by using printing materials with digital technology. The 3D printer uses filaments such as polylactic acid (PLA) and acrylonitrile butadiene styrene (ABS) plastic as raw materials for printing, and the filaments are typically wound around a filament spool to form a coil for user convenience.

To facilitate user operation, the 3D printer is generally provided with a filament spool holder, and the filament spool holder can be used to support and hold the filament spool. A filament on the filament spool may be inserted into an extrusion structure of a printing head. When the 3D printer is running, the extrusion structure can extrude the filament to a nozzle of the printing head for use. Under the action of the extrusion structure, the filament at the printing head draws the filament in the filament spool to continuously move toward the nozzle. In scenarios in which a plurality of filament spools are required, such as a multi-color printing scenario, the filament spool holder may be heavy and difficult to fix to the 3D printer.

### SUMMARY

The present application provides a filament spool holder for a 3D printer, a 3D printer, and a 3D printing system, which can automatically detect filament slippage.

In a first aspect, embodiments of the present application provide a filament spool holder for a 3D printer. The filament spool holder comprises:
a filament spool holder body;
at least two filament cylinder rotating shafts connected to the filament spool holder body, where each of the filament cylinder rotating shafts is configured to hold one 3D printing filament spool; and
at least two feeding/retracting apparatuses fixed to the filament spool holder body, where each of the feeding/retracting apparatuses comprisecomprises an extrusion mechanism, and is configured to convey a filament in a 3D printing filament spool on a corresponding filament cylinder rotating shaft to the 3D printer, or to retract the filament to the 3D printing filament spool on the corresponding filament cylinder rotating shaft.

In the embodiments of the present application, a plurality of 3D printing filament spools can be held on the filament spool holder at the same time; additionally, the feeding/retracting apparatuses are configured to provide an acting force to the filament, such that even if the filament spool holder is positioned far away from the 3D printer, insufficient extrusion force for filament feeding or retracting does not occur.

With reference to the first aspect, in a first possible implementation, the at least two filament cylinder rotating shafts comprisecomprise filament cylinder rotating shafts distributed on two sides of the filament spool holder body, and the at least two feeding/retracting apparatuses comprisecomprise feeding/retracting apparatuses distributed on the two sides of the filament spool holder body, where each of the feeding/retracting apparatuses corresponds to the filament cylinder rotating shaft located on a same side.

In the embodiments of the present application, by arranging the filament cylinder rotating shafts on two sides of the filament spool holder body, the space utilization of the filament spool holder can be improved.

With reference to the first aspect or any of the foregoing possible implementations, in a second possible implementation, the at least two filament cylinder rotating shafts comprisecomprise two filament cylinder rotating shafts located on one side of the filament spool holder body, the at least two feeding/retracting apparatuses comprisecomprise two feeding/retracting apparatuses located on a same side as the two filament cylinder rotating shafts, and the two feeding/retracting apparatuses are located between the two filament cylinder rotating shafts.

In the embodiments of the present application, the distance between the 3D printing filament spool and the feeding/retracting apparatus is reduced, such that the whole filament spool holder can be more simplified.

With reference to the first aspect or any of the foregoing possible implementations, in a third possible implementation, in the two filament cylinder rotating shafts on the one side of the filament spool holder body, an axis of one filament cylinder rotating shaft is higher than an axis of the other filament cylinder rotating shaft.

In the embodiments of the present application, by arranging the two filament cylinder rotating shafts on the one side in a vertically staggered manner with one higher than the other, the space occupied by the 3D printing filament spools held on the two filament cylinder rotating shafts on the horizontal plane can be reduced.

With reference to the first aspect or any of the foregoing possible implementations, in a fourth possible implementation, the filament spool holder further comprisecomprises:
a support stand fixedly connected to a bottom of the filament spool holder body, where the support stand is configured to support the filament spool holder body.

With reference to the first aspect or any of the foregoing possible implementations, in a fifth possible implementation, one end of the support stand is fixedly connected to the bottom of the filament spool holder body, and the other end of the support stand is fixed to the 3D printer.

In the embodiments of the present application, the filament spool holder can be fixed to the 3D printer via the support stand.

With reference to the first aspect or any of the foregoing possible implementations, in a sixth possible implementation, the at least two filament cylinder rotating shafts are in one-to-one correspondence with the at least two feeding/retracting apparatuses.

With reference to the first aspect or any of the foregoing possible implementations, in a seventh possible implementation, for any one of the at least two feeding/retracting apparatuses, a filament entry of the feeding/retracting apparatus faces downward, and a filament exit of the feeding/retracting apparatus faces upward; or the filament entry of the feeding/retracting apparatus faces upward, and the filament exit of the feeding/retracting apparatus faces downward.

With reference to the first aspect or any of the foregoing possible implementations, in an eighth possible implementation, the filament spool holder further comprisecomprises:
a control component configured to control the feeding/retracting apparatus to provide the filament in the 3D printing filament spool on the corresponding filament cylinder rotating shaft to the 3D printer, or to control the feeding/retracting apparatus to retract the filament to the 3D printing filament spool on the corresponding filament cylinder rotating shaft.

In the embodiments of the present application, the feeding apparatus can be controlled via the control component to assist in filament feeding and retracting.

With reference to the first aspect or any of the foregoing possible implementations, in a ninth possible implementation, the feeding/retracting apparatus comprises:
a motor;
a driving gear connected to the motor, where the motor is configured to drive the driving gear to rotate;
a driven gear spaced apart from the driving gear, where the driving gear and the driven gear are configured to cooperate to clamp the filament supplied by the 3D printing filament spool; and
a speed sensor configured to measure rotational speed information of the motor and movement information of the filament.

In the embodiments of the present application, filament slippage can be automatically detected based on the rotational speed information of the motor and the movement information of the filament that are measured by the speed sensor.

With reference to the first aspect or any of the foregoing possible implementations, in a tenth possible implementation, the feeding/retracting apparatus further comprises:
a gear reduction system connected to a motor shaft of the motor, where an output gear of the gear reduction system meshes with the driving gear.

In the embodiments of the present application, through the gear reduction system, the problem of uncontrollable filament feeding speed caused by an excessive torque applied to the driving gear can be avoided.

With reference to the first aspect or any of the foregoing possible implementations, in an eleventh possible implementation, in the second possible implementation, the speed sensor comprises:
a motor-side Hall speed sensor configured to measure the rotational speed information of the motor, where the motor is provided with a magnet that rotates with the motor; and
a filament-side Hall speed sensor configured to measure rotational speed information of the driven gear, where the driven gear is provided with a magnet that rotates with the driven gear.

In the embodiments of the present application, the rotational speed information of the driven gear can be measured by using the filament-side Hall speed sensor, and the movement information of the filament can be determined based on the rotational speed information of the driven gear. Then, whether filament slippage occurs can be automatically detected based on the movement information of the filament and the rotational speed information of the motor.

With reference to the first aspect or any of the foregoing possible implementations, in a twelfth possible implementation, the at least two filament cylinder rotating shafts being connected to the filament spool holder body comprises: the at least two filament cylinder rotating shafts are connected to the filament spool holder body via fixed tubes, the at least two filament cylinder rotating shafts are rotatably connected to the fixed tubes, and the fixed tubes are fixedly connected to the filament spool holder body.

In a second aspect, the embodiments of the present application further provide a 3D printer. The 3D printer comprises the filament spool holder described with reference to the first aspect or any one of the foregoing possible implementations in the first aspect, where a filament spool holder body of the filament spool holder is fixedly connected to a frame of the 3D printer.

In a third aspect, the embodiments of the present application further provide a 3D printer system. The 3D printer system comprises a 3D printer and the filament spool holder described with reference to the first aspect or any of the foregoing possible implementations in the first aspect.

It should be understood that for implementation and beneficial effects of the foregoing aspects of the present application, reference may be made to each other.

### BRIEF DESCRIPTION OF THE DRAWINGS

FIG. 1 is a schematic diagram of a scenario of a 3D printing system according to an embodiment of the present application;
FIG. 2 is a schematic plan view of the structure of a filament spool holder according to an embodiment of the present application;
FIG. 3 is a schematic plan view of the structure of a filament spool holder according to an embodiment of the present application;
FIG. 4 is a schematic plan view of the structure of a filament spool holder according to an embodiment of the present application;
FIG. 5 is a schematic plan view of the structure of a filament spool holder according to an embodiment of the present application;
FIG. 6 is a three-dimensional schematic structural diagram of a filament spool holder according to an embodiment of the present application;
FIG. 7a is a schematic plan view of the structure of a feeding/retracting apparatus according to an embodiment of the present application;
FIG. 7b is a schematic plan view of the structure of a feeding/retracting apparatus according to an embodiment of the present application;
FIG. 8 is a schematic plan view of the structure of a feeding/retracting apparatus according to an embodiment of the present application;
FIG. 9 is a schematic plan view of the structure of a feeding/retracting apparatus according to an embodiment of the present application;
FIG. 10 is a schematic plan view of the structure of a feeding/retracting apparatus according to an embodiment of the present application;
FIG. 11 is a diagram of an operating state of a drive assembly according to an embodiment of the present application; and
FIG. 12 is a diagram of an operating state of a filament guide apparatus according to an embodiment of the present application.

### DETAILED DESCRIPTION

Implementations of the technical solutions of the present application are further described in detail below with reference to the accompanying drawings.

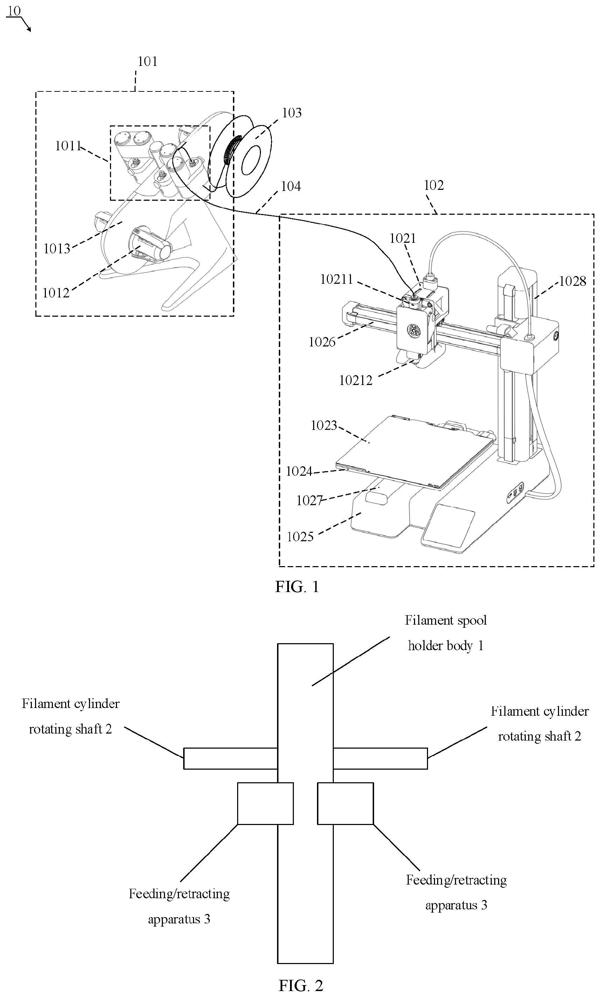

Referring to FIG. 1, FIG. 1 is a schematic diagram of a scenario of a 3D printing system according to an embodiment of the present application. As shown in FIG. 1, a 3D printing system 10 comprises a filament spool holder 101 and a 3D printer 102 connected to the filament spool holder 101.

The filament spool holder 101 comprises feeding/retracting apparatuses 1011, filament cylinder rotating shafts 1012, and a filament spool holder body 1013. The filament cylinder rotating shaft 1012 may comprise a sleeve and a fixed tube. The sleeve is detachably connected to the fixed tube of the filament spool holder 101, and the filament cylinder rotating shaft 1012 is configured to hang or support a filament spool 103. A filament 104 is wound around the filament spool 103, and the filament 104 may be provided to the 3D printer through the feeding/retracting apparatus 1011, or the filament 104 may be retracted to the filament spool 103 through the feeding/retracting apparatus 1011. That is, the feeding/retracting apparatus 1011 can be configured to feed or retract filaments.

The 3D printer 102 comprises a printing head 1021. The printing head 1021 comprises a filament guide unit 10211, a nozzle 10212, and an extrusion structure arranged between the filament guide unit 10211 and the nozzle 10212. The extrusion structure is also a feeding/retracting apparatus. During the feeding process of the filament spool holder 101, the filament 104 enters the extrusion structure after passing through the filament guide unit 10211, and the extrusion structure provides the filament 104 to the nozzle 10212. During the retracting process of the filament spool holder 101, the 3D printer 102 cuts off the filament 104 in the printing head 1021, the extrusion structure conveys the filament 104 to the filament spool holder 101, and the feeding/retracting apparatus 1011 in the filament spool holder 101 retracts the filament 104 to the filament spool 103.

In one embodiment, the 3D printer 102 may, for example, cut off the filament 104 between the extrusion structure and the nozzle 10212 or cut off the filament 104 within the extrusion structure. The position at which the 3D printer cuts off a printing material is not limited in the present application.

Illustratively, the 3D printer 102 further comprises a build plate 1023, a heatbed 1024, and a base 1025. The heatbed 1024 is arranged on a side of the base 1025 facing the nozzle 1022, and the heatbed 1024 has a heating function. The build plate 1023 is arranged on a side of the heatbed 1024 facing the nozzle 1022, the heat of the heatbed 1024 can be conducted to the build plate 1023, and the nozzle 1022 can extrude a printing material in a molten state onto the build plate 1023.

In a specific implementation, the 3D printer adjusts the temperatures of the nozzle 1022 and the heatbed 1024 based on the material information of the filament 104. The 3D printer adjusts the temperature of the nozzle 1022 to heat the filament 104 to a molten state, and adjusts the temperature of the heatbed 1024 to adhere the filament 104 extruded from the nozzle 1022 to the build plate 1023. The printing head 1021 is slidably connected to a first guide rail 1026, and the printing head 1021 can move in the length direction of the first guide rail 1026, that is, implementing a printing path of the 3D printer 102 in the length direction of the first guide rail 1026. Moreover, the heatbed 1024 is slidably connected to a second guide rail 1027, and the 3D printer 102 moves in the length direction of the second guide rail 1027, that is, implementing a printing path of the 3D printer 102 in the length direction of the second guide rail 1027. The length direction of the second guide rail 1027 is perpendicular to the length direction of the first guide rail 1026. Furthermore, the first guide rail 1026 is slidably connected to a third guide rail 10128, and the 3D printer 102 can move in the length direction of the third guide rail 102 via the first guide rail 1026, thereby implementing a printing path in a direction perpendicular to the length of the second guide rail 1027 and perpendicular to the length of the first guide rail 1026. That is, the 3D printer 102 can implement three printing paths in directions perpendicular to each other, thereby printing a three-dimensional object.

In the embodiments of the present application, the structure of the filament spool holder can assist the filament feeding and retracting, and allows a plurality of 3D printing filament spools to be held on the filament spool holder. The structure of the filament spool holder will be described in detail below with reference to FIG. 2 to FIG. 7b. Referring to FIG. 2, FIG. 2 is a schematic structural diagram of a filament spool holder according to an embodiment of the present application. The filament spool holder may comprise:
a filament spool holder body 1;
at least two filament cylinder rotating shafts 2 connected to the filament spool holder body 1, where each of the filament cylinder rotating shafts 2 is configured to hold one 3D printing filament spool; and
at least two feeding/retracting apparatuses 3 fixed to the filament spool holder body 1, where each of the feeding/retracting apparatuses 3 comprises an extrusion mechanism, and is configured to convey a filament in a 3D printing filament spool on a corresponding filament cylinder rotating shaft 2 to the 3D printer, or to retract the filament to the 3D printing filament spool on the corresponding filament cylinder rotating shaft 2.

During a specific implementation, the filament cylinder rotating shaft 2 may be rotatably or fixedly connected to the filament spool holder body 1.

Specifically, the filament cylinder rotating shaft 2 may comprise a sleeve and a fixed tube. The sleeve is mounted outside the fixed tube and configured to hang or support the 3D printing filament spool.

Specifically, the filament cylinder rotating shaft 2 may alternatively comprise a sleeve, but not comprise a fixed tube. The connection between the filament cylinder rotating shaft 2 and the filament spool holder body 1 may be understood as a direct connection between the filament cylinder rotating shaft 2 and the filament spool holder body 1, or an indirect connection between the filament cylinder rotating shaft 2 and the filament spool holder body 1 via a fixed tube.

The filament cylinder rotating shaft 2 being able to rotate relative to the filament spool holder body 1 may be understood as: The sleeve is rotatably connected to the fixed tube, and the fixed tube is fixed to the filament spool holder body 1; or the sleeve is fixedly connected to the fixed tube, and the fixed tube is rotatably connected to the filament spool holder body 1; or the sleeve is rotatably connected to the fixed tube, and the fixed tube is rotatably connected to the filament spool holder body 1; or the sleeve is fixedly connected to the fixed tube, and the fixed tube is fixed to the filament spool holder body 1.

The connection comprises a detachable connection and a non-detachable connection. For example, the fixed connection may comprise a detachable fixed connection and a non-detachable fixed connection, the rotatable connection may comprise a detachable rotatable connection and a non-detachable rotatable connection, and the slidable connection may comprise a detachable slidable connection and a non-detachable slidable connection. The connection may also be a direct connection or an indirect connection via a component. For example, in the case of a detachable fixed connection, it means that in the mounted state, the positional relationship between at least two connected objects can be fixed; similarly, there are rotatable connections, slidable connections, etc.

To ensure that the filament in the 3D printing filament spool can be stably moved from the 3D printing filament spool to the printing head of the 3D printer, or stably retracted to the 3D printing filament spool, the embodiments of the present application provide a filament spool holder comprising a feeding/retracting apparatus. The feeding/retracting apparatus is arranged on the filament spool holder to assist the filament feeding and retracting of the feeding/retracting apparatus of the 3D printer, which can effectively avoid the problem that the printing head has no filament to use due to an insufficient extrusion force of the extrusion structure, or the problem that the filament cannot be properly retracted to the 3D printing filament spool, thereby improving the efficiency and stability of filament feeding and retracting of the 3D printer.

In the embodiments of the present application, the filament spool holder may comprise a filament spool holder body 1. The filament spool holder body 1 can be configured to hold the filament cylinder rotating shaft 2 and the feeding/retracting apparatus 3. The shape of the filament spool holder may be designed based on an actual situation. For example, the filament spool holder may be designed as a rectangular prism, a cube, an ellipsoid, etc., and the filament spool holder body 1 may be in a flat shape or the like. This is not limited in the embodiments of the present application.

The filament spool holder may further comprise filament cylinder rotating shafts 2 configured to hold the 3D printing filament spools, and each of the filament cylinder rotating shafts 2 can be configured to hold one 3D printing filament spool. The filament cylinder rotating shaft 2 may be connected to the filament spool holder body 1. Specifically, the axis of the filament cylinder rotating shaft 2 is perpendicular to the surface of the filament spool holder body 1, on which the junction of the filament cylinder rotating shaft 2 and the filament spool holder body 1 is located. The filament cylinder rotating shaft 2 can rotate relative to the filament spool holder body 1, so as to rotate with the 3D printing filament spool when the 3D printing filament spool rotates, thereby reducing the frictional force and resistance applied to the 3D printing filament spool.

In a possible implementation, when a user uses the 3D printer to print an object, different colors and different material types of filaments may be needed, and the filaments of different colors and different material types correspond to different 3D printing filament spools. To improve the efficiency of 3D printing, the filament cylinder rotating shaft may comprise at least two filament cylinder rotating shafts 2, and filaments of different colors and material types may be held and stored on different filament cylinder rotating shafts 2. In this way, the filament spool holder with the at least two filament cylinder rotating shafts 2 can hold at least two 3D printing filament spools, and the filaments stored in the at least two 3D printing filament spools may be of different colors and/or different material types. This is not limited in the embodiments of the present application.

The filament spool holder may also comprise at least two feeding/retracting apparatuses. Specifically, the at least two filament cylinder rotating shafts are in one-to-one correspondence with the at least two feeding/retracting apparatuses. That is, each feeding/retracting apparatus corresponds to one filament cylinder rotating shaft, and each feeding/retracting apparatus is threaded by a filament in a 3D printing filament spool held on a filament cylinder rotating shaft corresponding to the feeding/retracting apparatus.

The extrusion mechanism may be provided with a motor, a gear set, etc. The motor drives the gear set to rotate, and a filament between the gear set moves, under the rotation of the gear set, toward the printing head or the 3D printing filament spool, so as to complete the filament feeding or retracting. Compared with completing the filament feeding and retracting only by the extrusion structure in the printing head, in the embodiments of the present application, the feeding/retracting apparatus arranged on the filament spool holder is further used, such that the filament feeding and retracting can be more stable.

In an embodiment of the present application, although the at least two filament cylinder rotating shafts can allow the 3D printer to achieve 3D printing of different colors and different material types of filaments, the space occupied by the filament spool holder is increased. To reduce the space occupied by the at least two filament cylinder rotating shafts and the at least two feeding/retracting apparatuses, in an example, the at least two filament cylinder rotating shafts and the at least two feeding/retracting apparatuses may be arranged with reference to the following positions. The at least two filament cylinder rotating shafts comprise filament cylinder rotating shafts distributed on two sides of the filament spool holder body, and the at least two feeding/retracting apparatuses comprise feeding/retracting apparatuses distributed on the two sides of the filament spool holder body, where each of the feeding/retracting apparatuses corresponds to the filament cylinder rotating shaft located on the same side.

Specifically, the at least two filament cylinder rotating shafts may be arranged on the two sides of the filament spool holder body separately, so as to make full use of the space on different side surfaces of the filament spool holder body. For any one of the filament cylinder rotating shafts, the axis thereof may be perpendicular to the side surface of the filament spool holder body to which the filament cylinder rotating shaft is connected.

In addition, for the at least two feeding/retracting apparatuses, they may also be distributed like the filament cylinder rotating shafts. That is, the at least two feeding/retracting apparatuses may also be arranged on the two sides of the filament spool holder body separately. For any one of the feeding/retracting apparatuses, it may correspond to the filament cylinder rotating shaft located on the same side of the filament spool holder body. That is, the feeding/retracting apparatus may be embedded with a filament in the 3D printing filament spool held on the filament cylinder rotating shaft located on the same side of the filament spool holder body.

In an embodiment of the present application, the at least two filament cylinder rotating shafts and the at least two feeding/retracting apparatuses may be specifically arranged with reference to the following positions.

The at least two filament cylinder rotating shafts comprise two filament cylinder rotating shafts located on one side of the filament spool holder body, the at least two feeding/retracting apparatuses comprise two feeding/retracting apparatuses located on the same side as the two filament cylinder rotating shafts, and the two feeding/retracting apparatuses are located between the two filament cylinder rotating shafts.

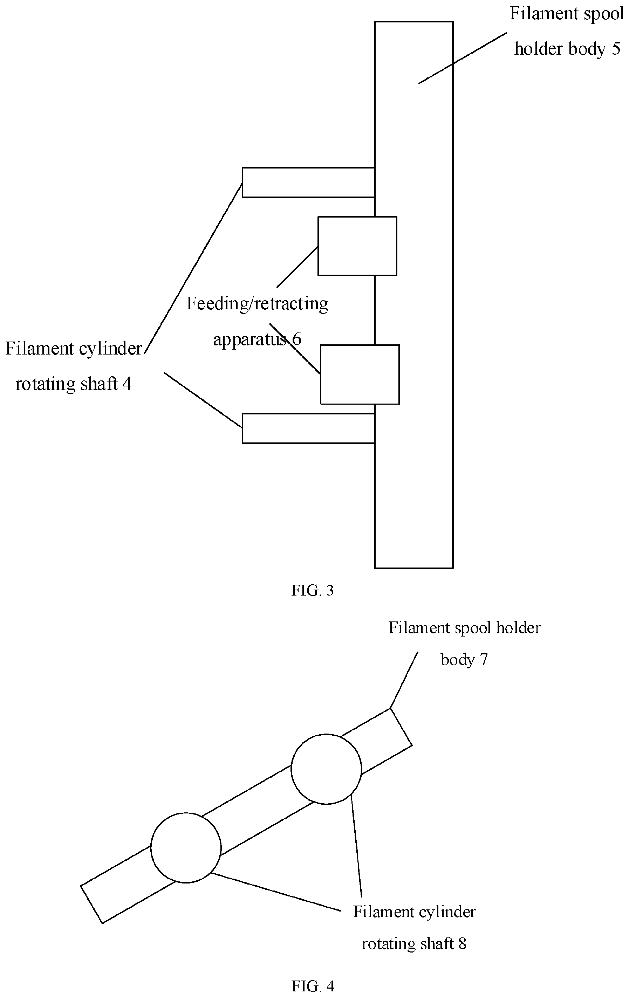

As shown in FIG. 3, at least two filament cylinder rotating shafts 4 may comprise two filament cylinder rotating shafts 4 located on the same side of a filament spool holder body 5, and the two filament cylinder rotating shafts 4 may be arranged on the same side of the filament spool holder body 5 and spaced apart from each other. Correspondingly, two feeding/retracting apparatuses 6 corresponding to the two filament cylinder rotating shafts 4 may also be arranged on this side of the filament spool holder body 5, so as to reduce the distances between the 3D printing filament spool and the feeding/retracting apparatuses 6, and thereby reduce the travelling distances of filaments. In addition, arranging the filament cylinder rotating shafts 4 and the feeding/retracting apparatuses 6 on the same side of the filament spool holder body 5 can reduce the filament bending between the 3D printing filament spool and the feeding/retracting apparatuses 6. This not only simplifies the filament spool holder but also reduces the frictional force during filament feeding and retracting, thereby improving the stability of filament feeding and retracting.

In a possible implementation, the two feeding/retracting apparatuses 6 on the same side may be located between the two filament cylinder rotating shafts 4 on this side. In one aspect, the whole filament spool holder can be more simplified, such that the filaments can be conveyed to the 3D printer from positions close to each other, thereby avoiding the waste of space caused by the conveyance of a plurality of filaments to the printer from different positions. In another aspect, the feeding/retracting apparatuses 6 can also be prevented from being excessively far away from the corresponding filament cylinder rotating shafts 4, thereby avoiding excessively long traveling distances of the filaments.

As an example, the two feeding/retracting apparatuses are located in the center of the filament spool holder body 5.

As an example, the two filament cylinder rotating shafts 4 on the same side are located at two ends of the filament spool holder body 5.

As an example, the two filament cylinder rotating shafts located on the same side of the filament spool holder body may be arranged with reference to the following positions.

In the two filament cylinder rotating shafts on the one side of the filament spool holder body, the axis of one filament cylinder rotating shaft is higher than the axis of the other filament cylinder rotating shaft.

As shown in FIG. 4, in two filament cylinder rotating shafts 8 on the same side of a filament spool holder body 7, the axis of one of the filament cylinder rotating shafts 8 may be arranged to be higher than the axis of the other filament cylinder rotating shaft 8. Compared with a parallel arrangement, the vertically staggered arrangement with one higher than the other can reduce the space occupied by the two filament cylinder rotating shafts 8 in the horizontal direction.

In an embodiment of the present application, the filament spool holder may further comprise:
a support stand fixedly connected to the bottom of the filament spool holder body, where the support stand is configured to support the filament spool holder body.

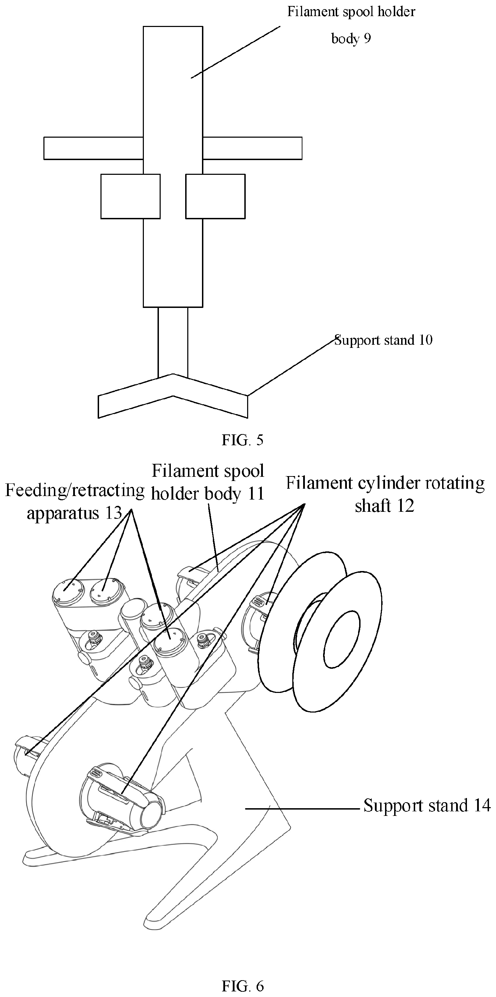

In a possible implementation, as shown in FIG. 5, the bottom of a filament spool holder body 9 of a filament spool holder may be fixedly connected to a support stand 10, so as to support the filament spool holder body 9 via the support stand 10.

As an example, one end of the support stand is fixedly connected to the bottom of the filament spool holder body, and the other end of the support stand is fixed to a 3D printer.

The support stand can support the filament spool holder body to make it on the 3D printer. One end of the support stand may be fixedly connected to the bottom of the filament spool holder body, and the other end may be fixedly connected to the 3D printer. The other end of the support stand may be fixed to different positions of the 3D printer based on an actual situation. For example, the other end of the support stand may be fixed to the top of the 3D printer or to a side surface of the 3D printer. This is not limited in the embodiments of the present application.

Illustratively, as shown in FIG. 6, two sides of a filament spool holder body 11 are each provided with at least two filament cylinder rotating shafts 12, and two filament cylinder rotating shafts 12 on the same side are arranged in a vertically staggered manner with one higher than the other; feeding/retracting apparatuses 13 are each arranged between the two filament cylinder rotating shafts 12 on the respective side and fixed to the filament spool holder body 11. The bottom of the filament spool holder body 11 is connected to a support stand 14.

In some feasible implementations, for any one of the at least two feeding/retracting apparatuses, a feeding port of the feeding/retracting apparatus faces downward, and a retracting port of the feeding/retracting apparatus faces upward; or the feeding port of the feeding/retracting apparatus faces upward, and the retracting port of the feeding/retracting apparatus faces downward.

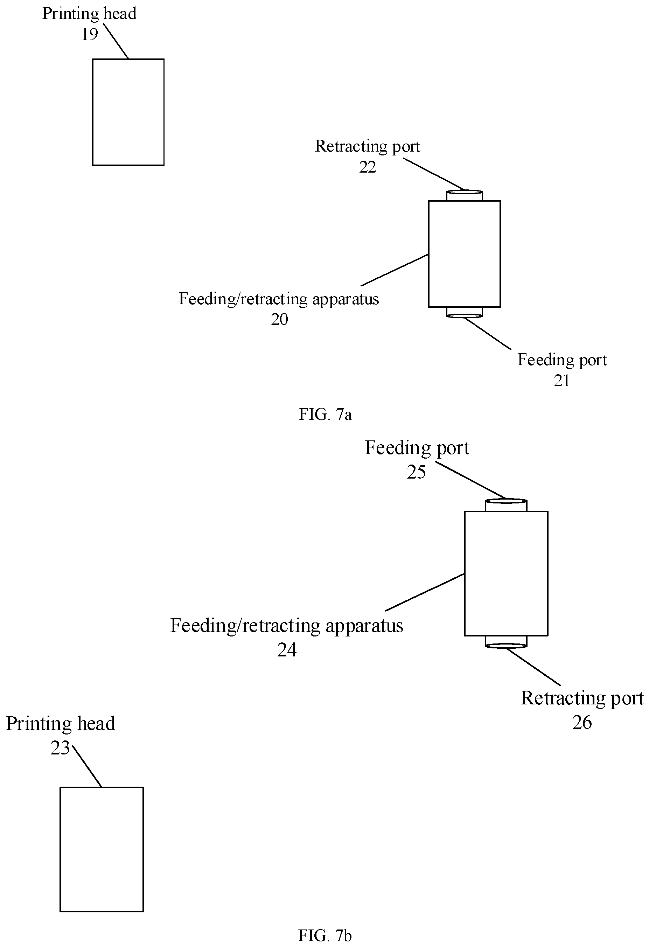

In one embodiment, to reduce the winding of the movement path of the filament, the orientations of the feeding port and the retracting port of the feeding/retracting apparatus may be designed based on the height of the printing head in the vertical direction and the height of the feeding/retracting apparatus in the vertical direction. The feeding port is connected to a filament on the 3D printing filament spool, and the retracting port is connected to the printing head. For example, as shown in FIG. 7a, when a printing head 19 is higher than a feeding/retracting apparatus 20, the feeding port and the retracting port of the feeding/retracting apparatus 20 may be arranged as such: The feeding port 21 faces downward, and the retracting port 22 faces upward. Alternatively, as shown in FIG. 7b, when a printing head 23 is lower than a feeding/retracting apparatus 24, the feeding port and the retracting port of the feeding/retracting apparatus 24 may be arranged as such: The feeding port 25 faces upward, and the retracting port 26 faces downward.

In an implementation of the embodiments of the present application, the feeding/retracting apparatus may comprise:
a motor;
a driving gear connected to the motor, where the motor is configured to drive the driving gear to rotate;
a driven gear spaced apart from the driving gear, where the driving gear and the driven gear are configured to cooperate to clamp the filament supplied by the 3D printing filament spool; and
a speed sensor configured to measure rotational speed information of the motor and movement information of the filament.

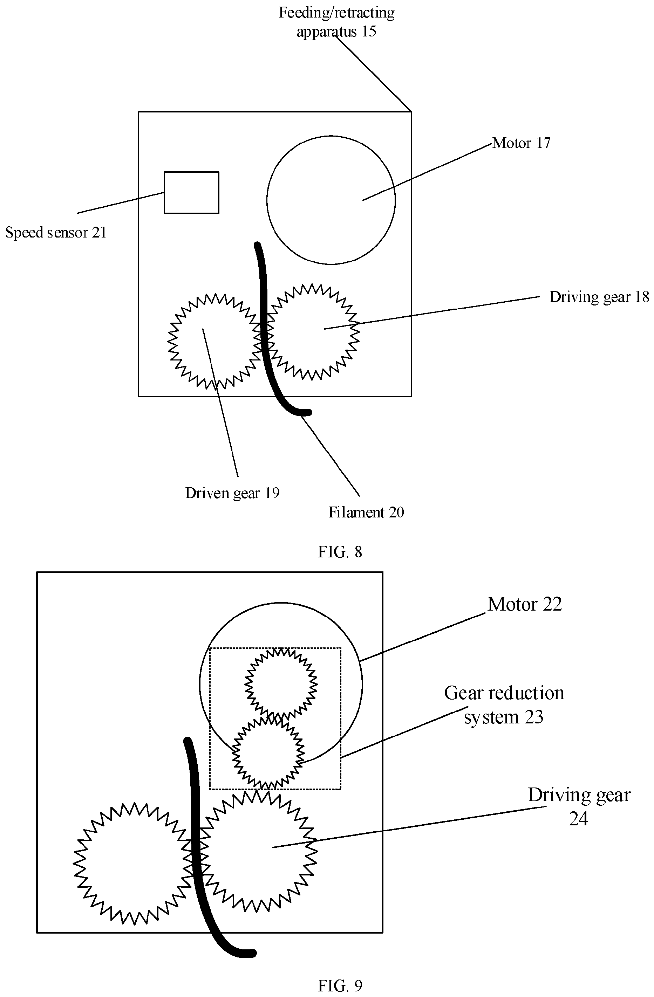

In some feasible implementations, as shown in FIG. 8, a feeding/retracting apparatus 15 may comprise a motor 17 configured to drive a driving gear 18 to rotate, and the driving gear 18 may be connected to a motor shaft of the motor 17. A driven gear 19 may be spaced apart from the driving gear 18, and the gap therebetween may be less than or equal to the diameter of a filament 20. The driving gear 18 and the driven gear 19 can cooperate to clamp the filament 20 within the gap, and convey, during the rotation of the driving gear 18, the filament 20 to the printing head or retract the filament to the 3D printing filament spool based on a frictional force between the driving gear 18 and the filament 20 and a pressure applied by the driven gear 19 and the driving gear 18 to the filament 20.

To detect the slippage of the filament 20 during filament feeding and retracting of the feeding/retracting apparatus 15, a speed sensor 21 may be additionally provided in the feeding/retracting apparatus 15, and the speed sensor 21 can be configured to measure rotational speed information of the motor 17 and movement information of the filament 20. In the embodiments of the present application, theoretical movement information of the filament may be determined based on the rotational speed information of the motor, and whether filament slippage occurs is automatically detected by comparing the theoretical movement information of the filament with actually collected movement information of the filament.

In some feasible implementations, the feeding/retracting apparatus of the filament spool holder may further comprise:
a gear reduction system connected to a motor shaft of the motor, where an output gear of the gear reduction system meshes with the driving gear.

In the embodiments of the present application, to prevent the motor from applying an excessive torque to the driving gear, which results in an excessively high filament feeding and retracting speed, the gear reduction system may be arranged between the motor and the driving gear. Specifically, as shown in FIG. 9, a motor shaft of a motor 22 may be connected to a driving gear 24 via a gear reduction system 23, and an output gear of the gear reduction system 23 may mesh with the driving gear 24. In this way, the torque actually applied by the motor 22 to the driving gear 24 is a torque after control. By implementing the embodiments of the present application, the speed of filament feeding and retracting can be controlled.

In some feasible implementations, the speed sensor may comprise:
a motor-side Hall speed sensor configured to measure the rotational speed information of the motor, where the motor is provided with a magnet that rotates with the motor; and
a filament-side Hall speed sensor configured to measure rotational speed information of the driven gear, where the driven gear is provided with a magnet that rotates with the driven gear.

The motor-side Hall speed sensor may be arranged for the motor, and the motor-side Hall speed sensor may obtain the rotational speed information of the motor by measuring a rotational speed of the magnet that is arranged on the motor and rotates with the motor. The filament-side Hall speed sensor arranged for the filament may measure a rotational speed of the magnet that is arranged on the driven gear and rotates with the driven gear.

Since the movement information of the filament is directly proportional to the rotational speed information of the driven gear, after the rotational speed information of the driven gear is obtained, the movement information of the filament can be determined based on the rotational speed information.

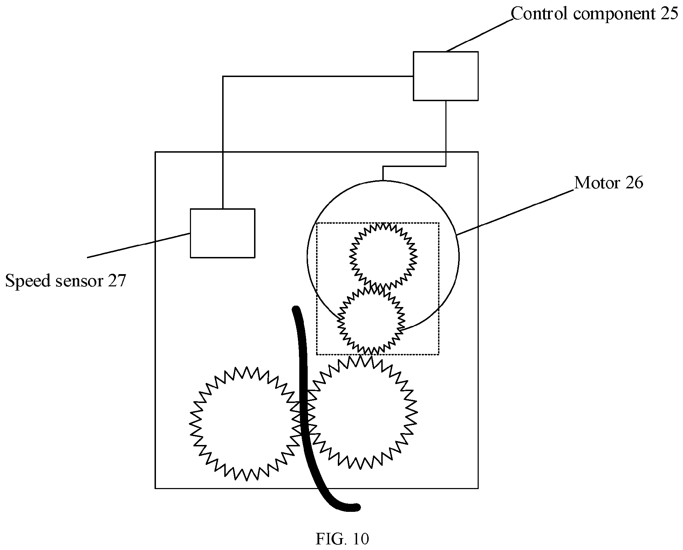

In some embodiments, as shown in FIG. 10, the filament spool holder may further comprise:
a control component 25 connected to a motor 26 and a speed sensor 27.

The control component 25 is configured to receive rotational speed information of the motor 26 and movement information of the filament that are sent by the speed sensor 27, and to send control information to the motor 26.

The control component may be a control component for the feeding/retracting apparatus, or may be a control component arranged for the filament spool holder. This is not limited in the embodiments of the present application. The control component may be connected to the motor and the speed sensor. When the control component is connected to the speed sensor, the rotational speed information of the motor and the movement information of the filament can be obtained from the speed sensor, and whether filament slippage occurs can be detected based on the rotational speed information and the movement information. Certainly, the control component may alternatively send the rotational speed information and the movement information to another control unit to identify and detect whether filament slippage occurs. This is not limited in the embodiments of the present application. Specifically, detecting whether filament slippage occurs based on the rotational speed information and the movement information comprises: A rotational speed of the driving gear is determined based on the rotational speed information, a rotational speed of the driven gear is determined based on the movement information, and when the rotational speed of the driving gear is greater than the rotational speed of the driven gear, it is determined that slippage occurs.

When determining that filament slippage occurs, the control component may send the control information to the motor to stop the motor from running; or when determining that no filament slippage occurs, the control component may control the motor to keep running in accordance with a previous control parameter. This is not limited in the embodiments of the present application.

In a feasible implementation, if whether filament slippage occurs is identified and detected by other control units, the control component may send, after receiving information indicating filament slippage, control information to the motor to stop the motor from running.

In another aspect, the embodiments of the present application further provide a 3D printer. The 3D printer may comprise any one of the filament spool holders described above, and a filament spool holder body of the filament spool holder may be fixedly connected to a frame of the 3D printer, and provide a filament to the 3D printer.

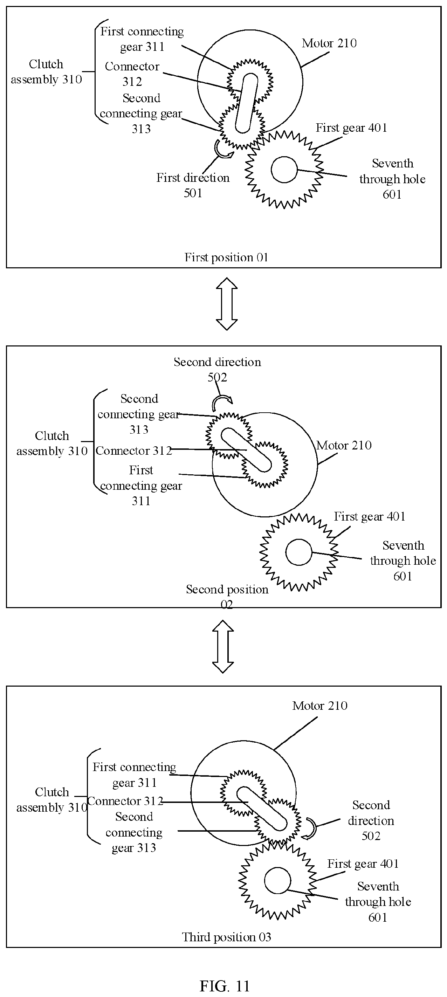

Referring to FIG. 11, the embodiments of the present application further provide another filament spool holder for a 3D printer. The filament spool holder comprises:
a filament spool holder body;
at least two filament cylinder rotating shafts connected to the filament spool holder body, where each of the filament cylinder rotating shafts is configured to hold one 3D printing filament spool; and
a drive assembly, where the drive assembly is configured to drive a first filament cylinder rotating shaft of the at least two filament cylinder rotating shafts to rotate, thereby enabling the first filament cylinder rotating shaft to drive the 3D printing filament spool held on the first filament cylinder rotating shaft to rotate.

During a specific implementation, the first filament cylinder rotating shaft may be any one of the at least two filament cylinder rotating shafts.

Specifically, the drive assembly can drive the first filament cylinder rotating shaft to rotate, thereby driving the 3D printing filament spool connected to the first filament cylinder rotating shaft to rotate, such that a filament in the 3D printing filament spool can be conveyed to the 3D printer along with the rotation, or a filament can be retracted to the 3D printing filament spool on the corresponding first filament cylinder rotating shaft.

To ensure that the filament in the 3D printing filament spool can be stably moved from the 3D printing filament spool to a printing head of the 3D printer, or stably retracted to the 3D printing filament spool, the embodiments of the present application provide a filament spool holder comprising a drive assembly. The drive assembly is arranged on the filament spool holder and configured to drive the first filament cylinder rotating shaft to rotate forward or reverse, so as to assist the filament feeding and retracting of a feeding/retracting apparatus of the 3D printer. This can effectively avoid the problem that the printing head has no filament to use due to an insufficient extrusion force of an extrusion structure, or the problem that the filament cannot be properly retracted to the 3D printing filament spool, thereby improving the efficiency and stability of filament feeding and retracting of the 3D printer.

In a feasible implementation, the drive assembly is configured to drive the first filament cylinder rotating shaft to rotate in a first direction 501, so as to retract a filament to the 3D printing filament spool on the first filament cylinder rotating shaft.

During a specific implementation, the first direction 501 may be any direction, provided that the filament can be retracted to the 3D printing filament spool on the first filament cylinder rotating shaft when the drive assembly drives the first filament cylinder rotating shaft to rotate in the first direction 501.

Specifically, after the filament in the 3D printing filament spool is cut off, the first filament cylinder rotating shaft may be driven by the drive assembly to rotate in the first direction 501, thereby enabling the filament in the 3D printing filament spool to be retracted to the 3D printing filament spool, so as to realize the retraction of the filament in the 3D printing filament spool.

In a feasible implementation, the drive assembly comprises a motor 210 and a ratchet structure that is in transmission connection to the motor 210. The ratchet structure meshes with a first gear, and the first gear is in transmission connection to the first filament cylinder rotating shaft. When the drive assembly is configured to drive the first filament cylinder rotating shaft to rotate in the first direction 501, the motor 210 is in transmission connection to the first filament cylinder rotating shaft, and when the drive assembly is configured to drive the first filament cylinder rotating shaft to rotate in a second direction 502, the motor 210 is in transmission disconnection from the first filament cylinder rotating shaft. The first direction 501 is opposite to the second direction 502.

Specifically, the motor 210 comprises at least two rotation modes. The at least two rotation modes comprise a first rotation mode and a second rotation mode, and the first rotation mode and the second rotation mode may enable the filament to be conveyed to the 3D printer or retracted from the 3D printer during filament feeding and filament retracting, respectively.

It can be understood that the first rotation mode and the second rotation mode refer to two rotation modes in opposite directions. In the two rotation modes in opposite directions, when one corresponds to a filament retracting operation, the other corresponds to a filament feeding operation. In other words, the correspondence of the first rotation mode and the second rotation mode to the filament feeding and filament retracting is not unique, and may be determined based on arrangements in an actual situation. For example, assume that the first rotation mode is a forward rotation of the motor 210, and the second rotation mode is a reverse rotation of the motor 210. If the forward rotation is to convey a filament to the 3D printer, the reverse rotation is to retract the filament to the 3D printing filament spool. On the contrary, if the forward rotation is to retract the filament to the 3D printing filament spool, the reverse rotation is to convey the filament to the 3D printer.

In a specific implementation, the motor 210 may drive the first filament cylinder rotating shaft to rotate in the first direction 501 in the first rotation mode (or the second rotation mode), thereby driving the 3D printing filament spool to retract the filament to the 3D printing filament spool, so as to realize filament retraction.

Specifically, the ratchet structure is mounted on an output shaft or a transmission shaft of the motor 210, and meshes with the first gear on the first filament cylinder rotating shaft. In one case, assume that the motor 210 is in the first rotation mode, a pawl of the ratchet structure can drive a ratchet to rotate, such that a gear of the ratchet structure can drive the first gear to rotate, and the first gear drives the first filament cylinder rotating shaft to rotate through the transmission of the first filament cylinder rotating shaft. In addition, after the filament in the 3D printing filament spool on the first filament cylinder rotating shaft is conveyed to the extrusion structure, the motor 210 is controlled to stop working. In this case, the filament can be pulled by the extrusion structure to continue the feeding, thereby avoiding the problem of desynchronization between the motor of the ratchet and a filament guide apparatus or a motor of the extrusion structure. If the motor 210 rotates in the second rotation mode, due to the one-way clutch characteristic of the pawl, the ratchet cannot be driven to rotate once the frictional force of the ratchet increases to a certain degree, such that the ratchet loses driving force and stops rotating. However, during stages where the frictional force of the ratchet is small, the ratchet can still rotate and retract the filament to a position above the extrusion structure. Furthermore, in the case that the retraction distance is short, it is even possible to retract the filament to the 3D printing filament spool on the first filament cylinder rotating shaft. It can be seen that in this embodiment, through the ratchet structure, the filament cylinder rotating shaft is driven during filament feeding as, so as to convey the filament to the extrusion structure of the 3D printer, and then the 3D printing filament spool can rotate with a tractive force of the filament guide apparatus or the extrusion structure to slowly feed the filament and rely on the frictional force of the ratchet to retract the filament during filament retracting.

It can be understood that in another case, the pawl of the ratchet structure is arranged in an opposite orientation, such that the first filament cylinder rotating shaft may lose driving force in the first rotation mode, and be driven to rotate in the second rotation mode.

Alternatively, the ratchet structure is mounted on an output shaft or a transmission shaft of the motor 210, and meshes with the first gear on the first filament cylinder rotating shaft. The pawl of the ratchet structure can drive the ratchet to rotate, such that the gear of the ratchet structure can drive the first gear to rotate, and the first gear drives the first filament cylinder rotating shaft to rotate through the transmission of the first filament cylinder rotating shaft. If the motor 210 rotates in the second rotation mode, due to the one-way clutch characteristic of the pawl, the ratchet cannot be driven to rotate. As a result, the ratchet loses driving force and stops rotating, thereby finally causing the first filament cylinder rotating shaft to lose driving force for rotation. In this case, the 3D printing filament spool may convey the filament to the 3D printer with a tractive force provided by the filament guide apparatus or the extrusion structure. It can be understood that in another case, the pawl of the ratchet structure is arranged in an opposite orientation, such that the first filament cylinder rotating shaft may lose driving force in the first rotation mode, and be driven to rotate in the second rotation mode. It can be seen that in this embodiment, through the ratchet structure, the first filament cylinder rotating shaft is driven during filament retracting, so as to drive the 3D printing filament spool to retract the filament to the 3D printing filament spool, thereby realizing filament retraction, and the first filament cylinder rotating shaft is not driven during filament feeding, such that the 3D printing filament spool can rotate with the tractive force of the filament guide apparatus or the extrusion structure to slowly extrude the filament. This enhances the efficiency of filament retracting and ensures the effect of filament feeding.

In a feasible implementation, the drive assembly is configured to drive the first filament cylinder rotating shaft to rotate in the second direction 502, so as to convey the filament in the 3D printing filament spool on the first filament cylinder rotating shaft to the 3D printer, and the first direction 501 is opposite to the second direction 502.

In a specific implementation, the motor 210 of the drive assembly may drive the first filament cylinder rotating shaft to rotate in the second direction 502 in the second rotation mode (or the first rotation mode).

In a feasible implementation, the drive assembly comprises a motor 210 and a clutch assembly 310, and the clutch assembly 310 is configured for transmission connection or transmission disconnection between the motor 210 and the first filament cylinder rotating shaft.

In a specific implementation, the drive assembly may comprise a motor 210 and a clutch assembly 310. Through the clutch assembly 310, the motor 210 drives the first filament cylinder rotating shaft to rotate in the second direction 502 during filament feeding, and finally the 3D printing filament spool is driven to rotate in the second direction 502, so as to convey the filament from the 3D printing filament spool to the 3D printer, thereby realizing filament feeding. When filament feeding needs to be switched to filament retracting, the motor 210 changes the rotation direction and rotates in a fourth direction that is opposite to a third direction, such that the clutch assembly is in transmission disconnection from the first filament cylinder rotating shaft, and finally is in transmission connection to the first filament cylinder rotating shaft in another manner. As a result, the clutch assembly drives the first filament cylinder rotating shaft to rotate in the first direction 501, and finally the 3D printing filament spool is driven to rotate, so as to retract the filament to the 3D printing filament spool, thereby realizing filament retraction. In some feasible embodiments, the clutch assembly 310 comprises a connector 312, a first connecting gear 311, and a second connecting gear 313. The connector 312 and the first connecting gear 311 are mounted on an output shaft of the motor 210 or a transmission shaft that is in transmission connection to the motor 210, and the second connecting gear 313 is rotatably connected to the connector 312 and meshes with the first connecting gear 311. The connector 312 abuts against the first connecting gear 311, so as to enable the connector 312 and the second connecting gear 313 to rotate in a circumferential direction of the transmission shaft or the output shaft as the first connecting gear 311 rotates.

Specifically, the first connecting gear 311 is mounted on the output shaft of the motor 210 or the transmission shaft that is in transmission connection to the motor 210, and is connected to the transmission shaft through shape complementarity. That is, the first connecting gear 311 may be provided with a non-circular through hole, and the transmission shaft may be provided with a mating segment with a shape complementary to the non-circular through hole. The transmission shaft may be mounted on the mating segment, such that the first connecting gear 311 can remain stationary relative to the transmission shaft. Alternatively, the first connecting gear 311 may be provided with a circular through hole, and a engaging structure may be provided in the circular through hole, while the transmission shaft may be provided with a engaging groove with a shape complementary to the engaging structure, such that the first connecting gear is connected to the transmission shaft by mating, and the first connecting gear 311 can remain stationary relative to the transmission shaft. When the transmission shaft is driven by the motor 210 to rotate, the first connecting gear 311 can rotate with the transmission shaft.

Further, the connector 312 comprises a first assembly and a second assembly. The first assembly comprises a first end mounted on the transmission shaft and a second end opposite to the first end, and the second assembly comprises a third end mounted on the transmission shaft and a fourth end opposite to the first end. The first end and the third end may abut against two sides of the first connecting gear 311 in a direction of an axis of rotation of the first connecting gear 311, respectively. The second end and the fourth end may abut against two sides of the second connecting gear 313 in a direction of an axis of rotation of the second connecting gear 313, respectively. The connector 312 may be made of metal, plastic, or another commonly used material. The first end may be provided with a first through hole, the third end may be provided with a second through hole, and the transmission shaft may sequentially pass through the first through hole, the circular through hole of the first connecting gear 311, and the second through hole. The second end may be provided with a third through hole, the fourth end may be provided with a fourth through hole, the second connecting gear may be provided with a fifth through hole, and then a first connecting shaft sequentially passes through the third through hole, the fifth through hole, and the fourth through hole. The first end and the third end may be an integrally connected structure, a first gap exists between the first end and the third end, and the width of the first gap is less than or equal to the width of the first connecting gear 311 in the direction of the axis of rotation. Alternatively, the second end and the fourth end may be an integrally connected structure, a second gap exists between the second end and the fourth end, and the width of the second gap is less than or equal to the width of the second connecting gear 313 in the direction of the axis of rotation.

In a possible instance, the second end of the first assembly is provided with a second connecting shaft integrated with the first assembly, and the second connecting shaft sequentially passes through the fifth through hole of the second connecting gear and a sixth through hole at the fourth end of the second assembly, such that the second connecting gear 313 is rotatably connected to the second connecting shaft. In an example, the second end of the first assembly is integrally provided with a rotating shaft, and the rotating shaft passes through the second connecting gear 313, such that the second connecting gear 313 is rotatably connected to the first assembly. In this case, the first assembly and the second assembly are clamped on two sides of the axes of rotation of the first connecting gear 311 and the second connecting gear 313 via an additionally provided clamping structure, such that the first assembly and the second assembly clamp the first connecting gear 311 and the second connecting gear 313. In other words, although the first end of the first assembly and the third end of the second assembly are mounted on the transmission shaft, the three are not directly fixed to each other. The first assembly may remain fixed relative to the second assembly with a pressure generated by abutting against the first connecting gear 311, and the pressure causes frictional forces between the first and second assemblies and the first connecting gear 311. The frictional forces enable the connector 312 formed by the first and second assemblies, and the second connecting gear 313, to pivot in a circumferential direction of the transmission shaft as the transmission shaft and the first connecting gear 311 rotate. That is, the first connecting gear 311, the second connecting gear 313, and the connector 312 may rotate as a whole with the transmission shaft. In addition, when an external force exists, the external force may be used to overcome the frictional force between the connector 312 and the second connecting gear 313, such that the connector 312 and the second connecting gear 313 can rotate as a whole relative to the first connecting gear 311. That is, the connector 312 and the second connecting gear 313 can pivot relative to the transmission shaft in the circumferential direction thereof.

In addition, to enable the first connecting gear 311 to abut against the connector 312, the transmission shaft may be further provided with two shaft shoulders, and the diameter of each of the shaft shoulders may be greater than the diameter of the transmission shaft. The two shaft shoulders may be located on two sides of the clutch assembly in an axial direction of the transmission shaft, respectively. The connector 312 may abut against one of the shaft shoulders, and the first connecting gear 311 may abut against the other shaft shoulder. The connector 312 can abut against the first connecting gear 311 by appropriately adjusting the size between the two shaft shoulders.

In a feasible implementation, the motor 210 rotates in a third direction to drive the second connecting gear 313 to rotate from a first position 01 to a second position 02, or to rotate from a second position 02 to a third position 03; the motor 210 rotates in a fourth direction to drive the second connecting gear 313 to rotate from the third position 03 to the second position 02, or to rotate from the second position 02 to the first position 01. The third direction is opposite to the fourth direction, and the second position 02 is located between the first position 01 and the third position 03. Specifically, on a rotation path of the second connecting gear, the second position 02 is located between the first position 01 and the third position 03.

When the second connecting gear 313 is located at the first position 01, the second connecting gear 313 meshes with one side of a first gear 401, and the first gear 401 is in transmission connection to the first filament cylinder rotating shaft. Specifically, the first gear 401 may be provided with a seventh through hole 601, and then mounted on the shaft body of the first filament cylinder rotating shaft through the seventh through hole 601, so as to enable the first gear 401 to drive the first filament cylinder rotating shaft to rotate.

The motor 210 rotates in the fourth direction to drive the first filament cylinder rotating shaft to rotate in the second direction 502, so as to convey the filament in the 3D printing filament spool on the first filament cylinder rotating shaft to the 3D printer.

When the second connecting gear 313 and is located at the third position 03, the second connecting gear 313 meshes with the other side of the first gear 401, and the motor 210 rotates in the third direction to drive the first filament cylinder rotating shaft to rotate in the first direction 501, so as to retract the filament to the 3D printing filament spool on the first filament cylinder rotating shaft.

When the second connecting gear 313 is located at the second position 02, the motor 210 is in transmission disconnection from the first filament cylinder rotating shaft.

After the filament in the 3D printing filament spool on the first filament cylinder rotating shaft is conveyed to the extrusion structure of the 3D printer, the motor 210 is controlled to rotate the second connecting gear 313 to the second position 02, so as to cut off the transmission between the second connecting gear 313 and the first gear 401, thereby avoiding the problem of desynchronization between the motor 210 and the motor of the extrusion structure. The desynchronization between the two motors causes filament stretching or loosening.

In a specific implementation, to enable the second connecting gear 313 to drive the first filament cylinder rotating shaft to rotate, one first gear 401 may be mounted on the shaft body of the first filament cylinder rotating shaft, or the first gear 401 may drive the first filament cylinder rotating shaft through a frictional force, or a gear structure is arranged on the first filament cylinder rotating shaft. The gear structure may mesh with the first gear 401. How the first gear drives the first filament cylinder rotating shaft is not limited in the present application. Through the connection between the first gear 401 and the second connecting gear 313 by engagement, when the second connecting gear 313 is driven by the first connecting gear 311 to rotate, the second connecting gear 313 can drive the first gear 401 to rotate, thereby driving the first filament cylinder rotating shaft to rotate in the first direction 501.

In an example, the second position 02 is a position of the clutch assembly 310 when the motor 210 stops working, the third position 03 is a position of the clutch assembly 310 when the motor 210 rotates in the third direction, and the first position 01 is a position of the clutch assembly 310 when the motor 210 rotates in the fourth direction.

Specifically, the motor 210 drives the transmission shaft to rotate in the third direction, thereby driving the connector 312, the first connecting gear 311, and the second connecting gear 313 to rotate as a whole relative to the filament spool holder body, such that the second connecting gear 313 can swing to a position where it can mesh with the first gear 401 of the first filament cylinder rotating shaft. That is, the clutch assembly is at the third position 03. Since the first gear 401 meshes with the second connecting gear 313, when the motor 210 continues to drive the transmission shaft to rotate in the third direction, the first gear 401 provides resistance and hinders the connector 312 from rotating in the circumferential direction of the transmission shaft. The resistance can overcome the frictional force between the connector 312 and the first connecting gear 311, such that the first connecting gear 311 and the connector 312 can rotate relative to each other. That is, the first connecting gear 311 can continue to rotate with the transmission shaft, while the connector 312 can remain stationary relative to the filament spool holder body. Since the first connecting gear 311 meshes with the second connecting gear 313, the first connecting gear 311 can rotate with the transmission shaft to drive the second connecting gear 313 to rotate relative to the connector 312, while the second connecting gear 313 can drive the first gear 401 to rotate, thereby driving the first filament cylinder rotating shaft to rotate. Finally, the first filament cylinder rotating shaft drives the 3D printing filament spool to rotate in the first direction 501, so as to retract the filament to the 3D printing filament spool.

When the 3D printer needs to be fed, the motor 210 is controlled to drive the transmission shaft to rotate in the fourth direction that is opposite to the third direction. In this case, the transmission shaft of the motor 210 drives the first connecting gear 311 to rotate in the fourth direction, such that the whole clutch assembly 310 rotates in the fourth direction, and the second connecting gear 313 is first in transmission disconnection from the first gear 401, and then gradually moves from the third position 03, via the second position 02, to the first position 01. When the second connecting gear 313 reaches the first position 01, the second connecting gear 313 meshes with the other side of the first gear 401, such that the first gear 401 is driven, by the second connecting gear 313, to rotate in the second direction 502, thereby driving the first filament cylinder rotating shaft that is in transmission connection to the first gear 401 to rotate in the second direction 502, and finally driving the 3D printing filament spool mounted on the first filament cylinder rotating shaft to rotate in the second direction 502, so as to convey the filament from the 3D printing filament spool to the printing head of the 3D printer. The structure is simple in this solution; the clutch assembly can move between the first position 01 and the second position 02 with only one motor 210, which can reduce the cost.

In some feasible implementations, the situation may be that the motor 210 is controlled to drive the transmission shaft to rotate in the third direction, so as to convey the filament in the 3D printing filament spool on the first filament cylinder rotating shaft to the 3D printer; the motor 210 is controlled to drive the transmission shaft to rotate in the fourth direction, so as to retract the filament to the 3D printing filament spool on the first filament cylinder rotating shaft. The rotation direction of the transmission shaft, that is, the relationship between the rotation direction of the first filament cylinder rotating shaft and filament feeding and retracting, is not limited in the present application.

In a feasible implementation, at least two filament guide apparatuses are provided, and the at least two filament guide apparatuses are fixed to the filament spool holder body. Each of the filament guide apparatuses comprises an extrusion mechanism and is configured to convey the filament in the 3D printing filament spool on the corresponding filament cylinder rotating shaft to the 3D printer or retract the filament to the 3D printing filament spool on the corresponding filament cylinder rotating shaft.

In a specific implementation, the filament spool may comprise at least two filament guide apparatuses. Specifically, the at least two filament cylinder rotating shafts are in one-to-one correspondence with the at least two filament guide apparatuses. That is, one filament guide apparatus corresponds to one filament cylinder rotating shaft, and one filament guide apparatus is threaded by a filament in a 3D printing filament spool held on a filament cylinder rotating shaft corresponding to the filament guide apparatus.

Each of the filament guide apparatuses comprises an extrusion mechanism, and the extrusion mechanism may be provided with a motor 210, a gear set, etc. The motor 210 drives the gear set to rotate, and a filament between the gear set moves, under the rotation of the gear set, toward a printing head or the 3D printing filament spool, so as to complete the filament feeding or retracting. Compared with completing the filament feeding and retracting only by the extrusion structure in the printing head, in the embodiments of the present application, the filament guide apparatus arranged on the filament spool holder is further used, such that the filament feeding and retracting can be more stable.

Further, through the cooperation between the filament guide apparatus and the drive assembly, the efficiency and stability of filament feeding and retracting can be improved. For example, during filament feeding, the drive assembly drives the first filament cylinder rotating shaft to rotate in the second direction 502, so as to convey the filament to the filament guide apparatus. In this case, the motor of the drive assembly may stop working, and then the extrusion mechanism in the filament guide apparatus may drive the filament to be conveyed to the printing head of the 3D printer. Finally, the printing head melts the filament, and the printing material in a molten state is extruded onto a build plate from a nozzle of the printing head. When an extrusion structure in the printing head drives the filament, the extrusion mechanism in the filament guide apparatus stops working. During filament retracting, the drive assembly drives the first filament cylinder rotating shaft to rotate in the first direction 501, so as to rewind the filament onto the 3D printing filament spool. At the same time, the extrusion mechanism in the filament guide apparatus extrudes the filament in the first direction 501 and cooperates with the drive assembly to realize filament retraction.

In a feasible implementation, the outer wall of the first filament cylinder rotating shaft abuts against the inner wall of a through hole on the 3D printing filament spool in a circumferential direction, and the first filament cylinder rotating shaft is able to drive the 3D printing filament spool to rotate through a frictional force.

In a specific implementation, the 3D printing filament spool comprises a through hole, and the 3D printing filament spool is mounted on the first filament cylinder rotating shaft through the through hole, such that the outer wall of the first filament cylinder rotating shaft abuts against the through hole of the 3D printing filament spool. When the first filament cylinder rotating shaft rotates, the 3D printing filament spool is driven to rotate through a frictional force.

Illustratively, the through hole may be open at one end and closed at the other end, or may be open at both ends.

It can be seen that in this embodiment, through the abutment between the outer wall of the first filament cylinder rotating shaft and the inner wall of the hole of the 3D printing filament spool, the first filament cylinder rotating shaft can drive the 3D printing filament spool to rotate.

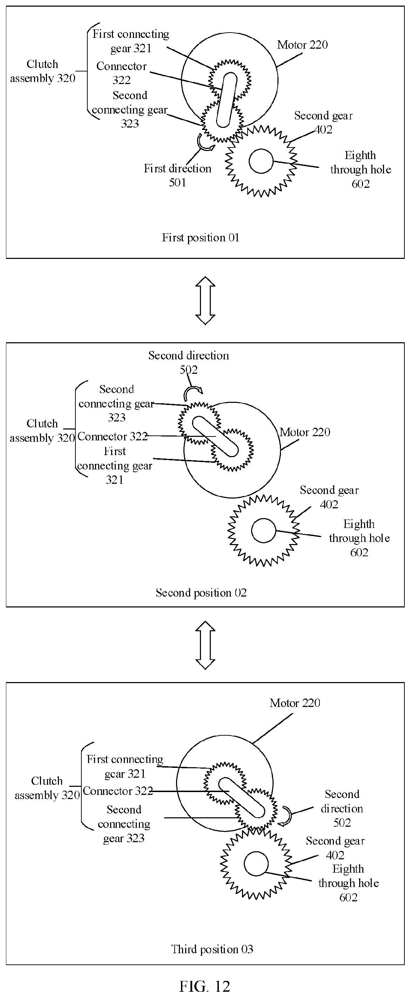

Referring to FIG. 12, the embodiments of the present application further provide a filament spool holder for a 3D printer. The filament spool holder comprises:
a filament spool holder body;
at least two filament cylinder rotating shafts connected to the filament spool holder body, where each of the filament cylinder rotating shafts is configured to hold one 3D printing filament spool; and
at least two filament guide apparatuses fixed to the filament spool holder body, where each of the filament guide apparatuses comprises an extrusion mechanism, and is configured to convey a filament in a 3D printing filament spool on a corresponding filament cylinder rotating shaft to the 3D printer, or to retract the filament to the 3D printing filament spool on the corresponding filament cylinder rotating shaft.

In a specific implementation, the filament spool may comprise at least two filament guide apparatuses. Specifically, the at least two filament cylinder rotating shafts are in one-to-one correspondence with the at least two filament guide apparatuses. That is, one filament guide apparatus corresponds to one filament cylinder rotating shaft, and one filament guide apparatus is threaded by a filament in a 3D printing filament spool held on a filament cylinder rotating shaft corresponding to the filament guide apparatus.

Each of the filament guide apparatuses comprises an extrusion mechanism, and the extrusion mechanism may be provided with a motor 220, a gear set, etc. The motor 220 drives the gear set to rotate, and a filament between the gear set moves, under the rotation of the gear set, toward a printing head or the 3D printing filament spool, so as to complete the filament feeding or retracting. Compared with completing the filament feeding and retracting only by the extrusion structure in the printing head, in the embodiments of the present application, the filament guide apparatus arranged on the filament spool holder is further used, such that the filament feeding and retracting can be more stable.

In a feasible implementation, the extrusion mechanism comprises a drive mechanism, an active extrusion wheel, and a driven extrusion wheel. The active extrusion wheel and the driven extrusion wheel are configured to clamp the filament, and the drive mechanism is configured to drive the active extrusion wheel to rotate in a first direction 501, so as to retract the filament to the 3D printing filament spool on the filament cylinder rotating shaft.

In a specific implementation, in some feasible implementations, the active extrusion wheel may be connected to the drive mechanism, and the drive mechanism provides driving force for the active extrusion wheel, so as to enable the active extrusion wheel to rotate. The driven extrusion wheel may be spaced apart from the active extrusion wheel, and the gap therebetween may be less than or equal to the diameter of the filament. The active extrusion wheel and the driven extrusion wheel may cooperate to clamp the filament within the gap, and convey, during the rotation of the active extrusion wheel, the filament to the printing head or retract the filament to the 3D printing filament spool based on a frictional force between the active extrusion wheel and the filament and a pressure applied by the driven extrusion wheel and the active extrusion wheel to the filament.

To detect the slippage of filament during filament feeding and retracting of the feeding/retracting apparatus, a speed sensor may be additionally provided in the extrusion mechanism, and the speed sensor can be configured to measure rotational speed information of the motor 220 and movement information of the filament. In the embodiments of the present application, theoretical movement information of the filament may be determined based on the rotational speed information of the motor 220, and whether filament slippage occurs is automatically detected by comparing the theoretical movement information of the filament with actually collected movement information of the filament. Illustratively, the drive mechanism may alternatively drive the active extrusion wheel to rotate in a first direction 501, and under the action of a frictional force between the active extrusion wheel and the driven extrusion wheel, the filament can be extruded from the gap between the active extrusion wheel and the driven extrusion wheel to the 3D printing filament spool, thereby retracting the filament to the 3D printing filament spool.

In a feasible implementation, the drive mechanism is configured to drive the active extrusion wheel to rotate in a second direction 502, so as to convey the filament in the 3D printing filament spool on the filament cylinder rotating shaft to the 3D printer, and the first direction 501 is opposite to the second direction 502.

In a specific implementation, the active extrusion wheel is driven, by the drive mechanism, to rotate in the second direction 502, and the driven extrusion wheel, due to the frictional force between the active extrusion wheel and the driven extrusion wheel, starts to rotate in the second direction 502 under the drive of the active extrusion wheel, such that the filament is extruded from the gap between the active extrusion wheel and the driven extrusion wheel, thereby conveying the filament to the printing head or retracting the filament to the 3D printing filament spool.

In some possible embodiments, the drive mechanism comprises a motor 220 and a clutch assembly 320, and the clutch assembly 320 is configured for transmission connection or transmission disconnection between the motor 220 and the active extrusion wheel.

In a specific implementation, the drive assembly may comprise a motor 220 and a clutch assembly 320. Through the clutch assembly 320, the motor 220 drives the active extrusion wheel to rotate in the second direction 502 during filament feeding, and finally the 3D printing filament spool is driven to rotate in the second direction 502, so as to convey the filament from the 3D printing filament spool to the 3D printer, thereby realizing filament feeding. When filament feeding needs to be switched to filament retracting, the motor 220 changes the rotation direction and rotates in a fourth direction that is opposite to a third direction, such that the clutch assembly is in transmission disconnection from the active extrusion wheel, and finally is in transmission connection to the active extrusion wheel in another manner. As a result, the clutch assembly drives the active extrusion wheel to rotate in the first direction 501, and finally the 3D printing filament spool is driven to rotate, so as to retract the filament to the 3D printing filament spool, thereby realizing filament retraction.

In a feasible implementation, the clutch assembly 320 comprises a connector 322, a first connecting gear 321, and a second connecting gear 323. The connector 322 and the first connecting gear 321 are mounted on an output shaft of the motor 220 or a transmission shaft that is in transmission connection to the motor 220, and the second connecting gear 323 is rotatably connected to the connector 322 and meshes with the first connecting gear 321. The connector 322 abuts against the first connecting gear 321, so as to enable the connector 322 and the second connecting gear 323 to rotate in a circumferential direction of the transmission shaft or the output shaft as the first connecting gear 321 rotates.

Specifically, the first connecting gear 321 is mounted on the output shaft of the motor 220 or the transmission shaft that is in transmission connection to the motor 220, and is connected to the transmission shaft through shape complementarity. That is, the first connecting gear 321 may be provided with a non-circular through hole, and the transmission shaft may be provided with a mating segment with a shape complementary to the non-circular through hole. The transmission shaft may be mounted on the mating segment, such that the first connecting gear 321 can remain stationary relative to the transmission shaft. Alternatively, the first connecting gear 321 may be provided with a circular through hole, and a engaging structure may be provided in the circular through hole, while the transmission shaft may be provided with a engaging groove with a shape complementary to the engaging structure, such that the first connecting gear is connected to the transmission shaft by mating, and the first connecting gear 321 can remain stationary relative to the transmission shaft. When the transmission shaft is driven by the motor 220 to rotate, the first connecting gear 321 can rotate with the transmission shaft.

Further, the connector 322 comprises a first assembly and a second assembly. The first assembly comprises a first end mounted on the transmission shaft and a second end opposite to the first end, and the second assembly comprises a third end mounted on the transmission shaft and a fourth end opposite to the first end. The first end and the third end may abut against two sides of the first connecting gear 321 in a direction of an axis of rotation of the first connecting gear 321, respectively. The second end and the fourth end may abut against two sides of the second connecting gear 323 in a direction of an axis of rotation of the second connecting gear 323, respectively. The connector 322 may be made of metal, plastic, or another commonly used material. The first end may be provided with a first through hole, the third end may be provided with a second through hole, and the transmission shaft may sequentially pass through the first through hole, the circular through hole of the first connecting gear 321, and the second through hole. The second end may be provided with a third through hole, the fourth end may be provided with a fourth through hole, the second connecting gear may be provided with a fifth through hole, and then a first connecting shaft sequentially passes through the third through hole, the fifth through hole, and the fourth through hole. The first end and the third end may be an integrally connected structure, a first gap exists between the first end and the third end, and the width of the first gap is less than or equal to the width of the first connecting gear 321 in the direction of the axis of rotation. Alternatively, the second end and the fourth end may be an integrally connected structure, a second gap exists between the second end and the fourth end, and the width of the second gap is less than or equal to the width of the second connecting gear 323 in the direction of the axis of rotation.

In a possible instance, the second end of the first assembly is provided with a second connecting shaft integrated with the first assembly, and the second connecting shaft sequentially passes through the fifth through hole of the second connecting gear and a sixth through hole at the fourth end of the second assembly, such that the second connecting gear 323 is rotatably connected to the second connecting shaft. In an example, the second end of the first assembly is integrally provided with a rotating shaft, and the rotating shaft passes through the second connecting gear 323, such that the second connecting gear 323 is rotatably connected to the first assembly. In this case, the first assembly and the second assembly are clamped on two sides of the axes of rotation of the first connecting gear 321 and the second connecting gear 323 via an additional clamping structure, such that the first assembly and the second assembly clamp the first connecting gear 321 and the second connecting gear 323. In other words, although the first end of the first assembly and the third end of the second assembly are mounted on the transmission shaft, the three are not directly fixed to each other. The first assembly may remain fixed relative to the second assembly with a pressure generated by abutting against the first connecting gear 321, and the pressure causes frictional forces between the first and second assemblies and the first connecting gear 321. The frictional forces enable the connector 322 formed by the first and second assemblies, and the second connecting gear 323, to pivot in a circumferential direction of the transmission shaft as the transmission shaft and the first connecting gear 321 rotate. That is, the first connecting gear 321, the second connecting gear 323, and the connector 322 may rotate as a whole with the transmission shaft. In addition, when an external force exists, the external force may be used to overcome the frictional force between the connector 322 and the second connecting gear 323, such that the connector 322 and the second connecting gear 323 can rotate as a whole relative to the first connecting gear 321. That is, the connector 322 and the second connecting gear 323 can pivot relative to the transmission shaft in the circumferential direction thereof.

In addition, to enable the first connecting gear 321 to abut against the connector 322, the transmission shaft may be further provided with two shaft shoulders, and the diameter of each of the shaft shoulders may be greater than the diameter of the transmission shaft. The two shaft shoulders may be located on two sides of the clutch assembly in an axial direction of the transmission shaft, respectively. The connector 322 may abut against one of the shaft shoulders, and the first connecting gear 321 may abut against the other shaft shoulder. The connector 322 can abut against the first connecting gear 321 by appropriately adjusting the size between the two shaft shoulders.

In a feasible implementation, the motor 220 rotates in a third direction to drive the second connecting gear 323 to rotate from a first position 01 to a second position 02, or to rotate from a second position 02 to a third position 03; the motor 220 rotates in a fourth direction to drive the second connecting gear 323 to rotate from the third position 03 to the second position 02, or to rotate from the second position 02 to the first position 01. The third direction is opposite to the fourth direction, and the second position 02 is located between the first position 01 and the third position 03.

When the second connecting gear 323 is located at the first position 01, the second connecting gear 323 meshes with one side of a second gear 402, and the second gear 402 is in transmission connection to the active extrusion wheel. Specifically, the second gear 402 may be provided with an eighth through hole 602, and then mounted on the active extrusion wheel through the eighth through hole 602, or mounted on a rotating shaft of the active extrusion wheel. In other words, the second gear 402 is the active extrusion wheel. The motor 220 rotates in the fourth direction to drive the active extrusion wheel to rotate in the second direction 502, so as to convey the filament in the 3D printing filament spool on the first filament cylinder rotating shaft to the 3D printer.

When the second connecting gear 323 is located at the third position 03, the second connecting gear 323 meshes with the other side of the second gear 402, and the motor 220 rotates in the third direction to drive the active extrusion wheel to rotate in the first direction 501, so as to retract the filament to the 3D printing filament spool on the first filament cylinder rotating shaft.

When the second connecting gear 323 is located at the second position 02, the motor 220 is in transmission disconnection from the active extrusion wheel.

After the filament in the 3D printing filament spool on the first filament cylinder rotating shaft is conveyed to the extrusion structure of the 3D printer, the motor is controlled to rotate the second connecting gear to the second position 02, so as to cut off the transmission between the second connecting gear and the active extrusion wheel, thereby avoiding the problem of desynchronization between the motor and the motor of the extrusion structure. The desynchronization between the two motors causes filament stretching or loosening.

In a specific implementation, to enable the second connecting gear 323 to drive the active extrusion wheel to rotate, a second gear 402 may be mounted on the body of the active extrusion wheel, or the second connecting gear 323 may directly mesh with the active extrusion wheel. Through the connection between the second gear 402 and the second connecting gear 323 by engagement, when the second connecting gear 323 is driven by the first connecting gear 321 to rotate, the second connecting gear 323 can drive the second gear 402 to rotate, thereby driving the active extrusion wheel to rotate.

In an example, the second position 02 is a position of the clutch assembly 320 when the motor 220 stops working, the third position 03 is a position of the clutch assembly 320 when the motor 220 rotates in the third direction, and the first position 01 is a position of the clutch assembly 320 when the motor 220 rotates in the fourth direction.

Specifically, the motor 220 drives the transmission shaft to rotate in the third direction, thereby driving the connector 322, the first connecting gear 321, and the second connecting gear 323 to rotate as a whole relative to the filament spool holder body, such that the second connecting gear 323 can swing to a position where it can mesh with the second gear 402 of the active extrusion wheel. That is, the clutch assembly is at the third position 03. Since the second gear 402 meshes with the second connecting gear 323, when the motor 220 continues to drive the transmission shaft to rotate in the third direction, the second gear 402 provides resistance and hinders the connector 322 from rotating in the circumferential direction of the transmission shaft. The resistance can overcome the frictional force between the connector 322 and the first connecting gear 321, such that the first connecting gear 321 and the connector 322 can rotate relative to each other. That is, the first connecting gear 321 can continue to rotate with the transmission shaft, while the connector 322 can remain stationary relative to the filament spool holder body. Since the first connecting gear 321 meshes with the second connecting gear 323, the first connecting gear 321 can rotate with the transmission shaft to drive the second connecting gear 323 to rotate relative to the connector 322, while the second connecting gear 323 can drive the second gear 402 to rotate, thereby driving the active extrusion wheel to rotate. Finally, the active extrusion wheel, under the action of frictional force, drives the driven wheel to rotate, so as to retract the filament in the gap between the active extrusion wheel and the driven extrusion wheel to the 3D printing filament spool.

When the 3D printer needs to be fed, the motor 220 is controlled to drive the transmission shaft to rotate in the fourth direction that is opposite to the third direction. The transmission shaft of the motor 220 drives the first connecting gear 321 to rotate in the fourth direction, such that the whole clutch assembly 320 rotates in the fourth direction, and the second connecting gear 323 is first in transmission disconnection from the second gear, and then gradually moves from the third position 03, via the second position 02, to the first position 01. When the second connecting gear 323 reaches the first position 01, the second connecting gear 323 meshes with the other side of the second gear 402, such that the second gear 402 is driven, by the second connecting gear 323, to rotate in the second direction 502, thereby driving the active extrusion wheel that is in transmission connection to the second gear 402 to rotate in the second direction 502, so as to lead the filament out of the 3D printing filament spool and convey the filament to the printing head of the 3D printer. Additionally, a tractive force is generated to drive the 3D printing filament spool mounted on the first filament cylinder rotating shaft to rotate in the second direction 502, thereby realizing filament feeding operation.

The structure is simple in this solution; the clutch assembly can move between the first position 01 and the second position 02 with only one motor 220, which can reduce the cost.

In some feasible implementations, the situation may be that the motor 210 is controlled to drive the active extrusion wheel to rotate in the third direction, so as to convey the filament in the 3D printing filament spool on the first filament cylinder rotating shaft to the 3D printer; the motor 210 is controlled to drive the active extrusion wheel to rotate in the fourth direction, so as to retract the filament to the 3D printing filament spool on the first filament cylinder rotating shaft. The rotation direction of the active extrusion wheel, that is, the relationship between the rotation direction of the first filament cylinder rotating shaft and filament feeding and retracting, is not limited in the present application.

It can be understood that for a specific structure of the clutch assembly, reference may be made to the description of FIG. 11. Details are not described herein again.

It should be noted that the terms "first" and "second" are merely for descriptive purposes and are not to be construed as indicating or implying relative importance.

## Claims

1. A filament spool holder for a 3D printer, comprising:
a filament spool holder body;
at least two filament cylinder rotating shafts, connected to the filament spool holder body, wherein each of the filament cylinder rotating shafts is configured to hold one 3D printing filament spool; and
a drive assembly, wherein the drive assembly is configured to drive a first filament cylinder rotating shaft of the at least two filament cylinder rotating shafts to rotate, thereby enabling the first filament cylinder rotating shaft to drive the 3D printing filament spool held on the first filament cylinder rotating shaft to rotate.

2. The filament spool holder according to claim 1, wherein the drive assembly is configured to drive the first filament cylinder rotating shaft to rotate in a first direction to retract a filament to the 3D printing filament spool on the first filament cylinder rotating shaft.

3. The filament spool holder according to claim 2, wherein the drive assembly comprises a motor and a ratchet structure that is in transmission connection to the motor, the ratchet structure meshes with a first gear, and the first gear is in transmission connection to the first filament cylinder rotating shaft;
when the drive assembly is configured to drive the first filament cylinder rotating shaft to rotate in the first direction, the motor is in transmission connection to the first filament cylinder rotating shaft, and when the drive assembly is configured to drive the first filament cylinder rotating shaft to rotate in a second direction, the motor is in transmission disconnection from the first filament cylinder rotating shaft, wherein the first direction is opposite to the second direction.

4. The filament spool holder according to claim 1 or 2, wherein the drive assembly is configured to drive the first filament cylinder rotating shaft to rotate in a second direction, so as to convey the filament in the 3D printing filament spool on the first filament cylinder rotating shaft to the 3D printer, and the first direction is opposite to the second direction.

5. The filament spool holder according to claim 1, 2, or 4, wherein the drive assembly comprises a motor and a clutch assembly, and the clutch assembly is configured for transmission connection or transmission disconnection between the motor and the first filament cylinder rotating shaft.

6. The filament spool holder according to claim 5, wherein the clutch assembly comprises a connector, a first connecting gear, and a second connecting gear; the connector and the first connecting gear are mounted on an output shaft of the motor or a transmission shaft that is in transmission connection to the motor, and the second connecting gear is rotatably connected to the connector and meshes with the first connecting gear, wherein the connector abuts against the first connecting gear, so as to enable the connector and the second connecting gear to rotate in a circumferential direction of the transmission shaft or the output shaft as the first connecting gear rotates.

7. The filament spool holder according to claim 6, wherein the motor rotates in a third direction to drive the second connecting gear to rotate from a first position to a second position, or to rotate from a second position to a third position; the motor rotates in a fourth direction to drive the second connecting gear to rotate from the third position to the second position, or to rotate from the second position to the first position, wherein the third direction is opposite to the fourth direction, and the second position is located between the first position and the third position; when the second connecting gear is located at the first position, the second connecting gear meshes with one side of a first gear, the first gear is in transmission connection to the first filament cylinder rotating shaft, and the motor rotates in the fourth direction to drive the first filament cylinder rotating shaft to rotate in the second direction, so as to convey the filament in the 3D printing filament spool on the first filament cylinder rotating shaft to the 3D printer;
when the second connecting gear is located at the third position, the second connecting gear meshes with the other side of the first gear, and the motor rotates in the third direction to drive the first filament cylinder rotating shaft to rotate in the first direction, so as to retract the filament to the 3D printing filament spool on the first filament cylinder rotating shaft;
when the second connecting gear is located at the second position, the motor is in transmission disconnection from the first filament cylinder rotating shaft.

8. The filament spool holder according to any of claims 1 to 7, further comprising at least two filament guide apparatuses fixed to the filament spool holder body, wherein each of the filament guide apparatuses comprises an extrusion mechanism, and is configured to convey a filament in a 3D printing filament spool on a corresponding filament cylinder rotating shaft to the 3D printer, or to retract the filament to the 3D printing filament spool on the corresponding filament cylinder rotating shaft.

9. The filament spool holder according to any of claims 1 to 8, wherein an outer wall of the first filament cylinder rotating shaft abuts against an inner wall of a hole on the 3D printing filament spool in a circumferential direction, and the first filament cylinder rotating shaft is able to drive the 3D printing filament spool to rotate through a frictional force.

10. A filament spool holder for a 3D printer, comprising:
a filament spool holder body;
at least two filament cylinder rotating shafts, connected to the filament spool holder body, wherein each of the filament cylinder rotating shafts is configured to hold one 3D printing filament spool; and
at least two filament guide apparatuses, fixed to the filament spool holder body, wherein each of the filament guide apparatuses comprises an extrusion mechanism, and is configured to convey a filament in a 3D printing filament spool on a corresponding filament cylinder rotating shaft to the 3D printer, or to retract the filament to the 3D printing filament spool on the corresponding filament cylinder rotating shaft.

11. The filament spool holder according to claim 10, wherein the extrusion mechanism comprises a drive mechanism, an active extrusion wheel, and a driven extrusion wheel; the active extrusion wheel and the driven extrusion wheel are configured to clamp the filament, and the drive mechanism is configured to drive the active extrusion wheel to rotate in a first direction, so as to retract the filament to the 3D printing filament spool on the filament cylinder rotating shaft.

12. The filament spool holder according to claim 11, wherein the drive mechanism is configured to drive the active extrusion wheel to rotate in a second direction, so as to convey the filament in the 3D printing filament spool on the filament cylinder rotating shaft to the 3D printer, and the first direction is opposite to the second direction.

13. The filament spool holder according to any of claims 10 to 12, wherein the drive mechanism comprises a motor and a clutch assembly, and the clutch assembly is configured for transmission connection or transmission disconnection between the motor and the active extrusion wheel.

14. The filament spool holder according to claim 13, wherein the clutch assembly comprises a connector, a first connecting gear, and a second connecting gear; the connector and the first connecting gear are mounted on an output shaft of the motor or a transmission shaft that is in transmission connection to the motor, and the second connecting gear is rotatably connected to the connector and meshes with the first connecting gear, wherein the connector abuts against the first connecting gear, so as to enable the connector and the second connecting gear to rotate in a circumferential direction of the transmission shaft or the output shaft as the first connecting gear rotates.

15. The filament spool holder according to claim 14, wherein the motor rotates in a third direction to drive the second connecting gear to rotate from a first position to a second position, or to rotate from a second position to a third position; the motor rotates in a fourth direction to drive the second connecting gear to rotate from the third position to the second position, or to rotate from the second position to the first position, wherein the third direction is opposite to the fourth direction, and the second position is located between the first position and the third position; when the second connecting gear is located at the first position, the second connecting gear meshes with one side of a second gear, the second gear is in transmission connection to the active extrusion wheel, and the motor rotates in the fourth direction to drive the active extrusion wheel to rotate in the second direction, so as to convey the filament in the 3D printing filament spool on the filament cylinder rotating shaft to the 3D printer;
when the second connecting gear is located at the third position, the second connecting gear meshes with the other side of the second gear, and the motor rotates in the third direction to drive the active extrusion wheel to rotate in the first direction, so as to retract the filament to the 3D printing filament spool on the filament cylinder rotating shaft;
when the second connecting gear is located at the second position, the motor is in transmission disconnection from the active extrusion wheel.

16. The filament spool holder according to claim 1 or 10, wherein the at least two filament cylinder rotating shafts comprise filament cylinder rotating shafts distributed on two sides of the filament spool holder body, and at least two feeding/retracting apparatuses comprise feeding/retracting apparatuses distributed on the two sides of the filament spool holder body, wherein each of the feeding/retracting apparatuses corresponds to the filament cylinder rotating shaft located on a same side.

17. The filament spool holder according to claim 1, 10, or 16, wherein the at least two filament cylinder rotating shafts comprise two filament cylinder rotating shafts located on one side of the filament spool holder body, the at least two feeding/retracting apparatuses comprise two feeding/retracting apparatuses located on a same side as the two filament cylinder rotating shafts, and the two feeding/retracting apparatuses are located between the two filament cylinder rotating shafts.

18. The filament spool holder according to claim 17, wherein in the two filament cylinder rotating shafts on the one side of the filament spool holder body, an axis of one filament cylinder rotating shaft is higher than an axis of the other filament cylinder rotating shaft.

19. The filament spool holder according to any of claims 1 to 18, further comprising:
a support stand, fixedly connected to a bottom of the filament spool holder body, wherein the support stand is configured to support the filament spool holder body.

20. The filament spool holder according to claim 19, wherein one end of the support stand is fixedly connected to the bottom of the filament spool holder body, and the other end of the support stand is fixed to the 3D printer.

21. The filament spool holder according to any of claims 1 to 20, wherein the at least two filament cylinder rotating shafts are in one-to-one correspondence with the at least two feeding/retracting apparatuses.

22. The filament spool holder according to any of claims 1 to 21, wherein for any one of the at least two feeding/retracting apparatuses, a filament entry of the feeding/retracting apparatus faces downward, and a filament exit of the feeding/retracting apparatus faces upward; or the filament entry of the feeding/retracting apparatus faces upward, and the filament exit of the feeding/retracting apparatus faces downward.

23. The filament spool holder according to any of claims 1 to 22, further comprising:
a control component, configured to control the feeding/retracting apparatus to provide the filament in the 3D printing filament spool on the corresponding filament cylinder rotating shaft to the 3D printer, or to control the feeding/retracting apparatus to retract the filament to the 3D printing filament spool on the corresponding filament cylinder rotating shaft.

24. The filament spool holder according to any of claims 1 to 23, wherein the feeding/retracting apparatus comprises:
a motor;
a driving gear, connected to the motor, wherein the motor is configured to drive the driving gear to rotate;
a driven gear, spaced apart from the driving gear, wherein the driving gear and the driven gear are configured to cooperate to clamp the filament supplied by the 3D printing filament spool; and
a speed sensor, configured to measure rotational speed information of the motor and movement information of the filament.

25. The filament spool holder according to claim 24, wherein the feeding/retracting apparatus further comprises:
a gear reduction system, connected to a motor shaft of the motor, wherein an output gear of the gear reduction system meshes with the driving gear.

26. The filament spool holder according to claim 24 or 25, wherein the speed sensor comprises:
a motor-side Hall speed sensor, configured to measure the rotational speed information of the motor, wherein the motor is provided with a magnet that rotates with the motor; and
a filament-side Hall speed sensor, configured to measure rotational speed information of the driven gear, wherein the driven gear is provided with a magnet that rotates with the driven gear.

27. The filament spool holder according to any of claims 1 to 26, wherein the at least two filament cylinder rotating shafts being connected to the filament spool holder body comprises: the at least two filament cylinder rotating shafts are connected to the filament spool holder body via fixed tubes, the at least two filament cylinder rotating shafts are rotatably connected to the fixed tubes, and the fixed tubes are fixedly connected to the filament spool holder body.

28. A 3D printer, comprising the filament spool holder according to any of claims 1 to 27, wherein a filament spool holder body of the filament spool holder is fixedly connected to a frame of the 3D printer.

29. A 3D printer system, comprising a 3D printer and the filament spool holder according to any of claims 1 to 27.
